# EUROPEAN PATENT SPECIFICATION

(11) **EP 2 474 573 B1**
(45) Date of publication and mention of the grant of the patent: **19.03.2014**
(21) Application number: 11194505.1
(22) Date of filing: 20.12.2011
(51) Int. Cl.: C08L 83/04, C09D 183/04, C07F 7/08, C08K 3/36

(54) **Room temperature vulcanizable organopolysiloxane composition, its production method, and article coated by cured organopolysiloxane composition**
Bei Raumtemperatur vulkanisierbare Organopolysiloxan-Zusammensetzung, Herstellungsverfahren und Artikel, der mit der gehärteten Organopolysiloxan-Zusammensetzung beschichtet wird
Composition d'organopolysiloxane vulcanisable à température ambiante, son procédé de production et article revêtu par composition d'organopolysiloxane durcie

(30) Priority: 21.12.2010 JP 2010284636
(43) Date of publication of application: 11.07.2012
(73) Proprietor: Shin-Etsu Chemical Co., Ltd., Chiyoda-ku Tokyo (JP)
(72) Inventor: Sakamoto, Takafumi, Annaka-shi, Gunma (JP); Satou, Tokuo, Annaka-shi, Gunma (JP)
(74) Representative: Stoner, Gerard Patrick

(56) References cited:
- EP-A1- 1 273 618
- EP-A1- 2 172 523

## Description

### TECHNICAL FIELD

This invention relates to a room temperature vulcanizable (RTV) organopolysiloxane composition (hereinafter sometimes referred to as the RTV silicone rubber composition) which is suitable for use as a coating material. More specifically, this invention relates to a RTV organopolysiloxane composition which is well adapted for spray coating, and which forms a coating of consistent thickness with excellent coating strength, coating hardness, rubber properties, water resistance, and moisture resistance. Accordingly, the RTV organopolysiloxane composition is well adapted for applications such as coating material which require water resistance such as ship bottom paint, raceway duct of power plant, and fish net coating; moisture resistant coating material which require moisture resistance such as LCD and PDP; adhesive sealant between cable and the resin coating; adhesive sealant between resin case or resin connector and the cable; and adhesive sealant of reduced pressure chamber or pressurized chamber, and most adapted for applications such as ship bottom paint, raceway duct of power plant, and fish net coating to prevent adhesion and growth of aquatic organisms on their surface. This invention also relates its production method and an article coated by the composition.

### BACKGROUND

Various room temperature vulcanizable (RTV) silicone rubber compositions which gives rubbery elastomer at room temperature are known in the art. The cured rubbers obtained from the RTV silicone rubber composition are used in various fields, and in particular, in the field of construction for the adhesion between glass materials, adhesion between metal and glass materials, as a sealant in the concrete joint or the like since they are superior in weatherability, durability, heat resistance, and cold resistance compared to other organic rubbers. Recently, the RTV silicone rubber compositions have also found wide use as a coating material for buildings, plants, and the interior and exterior of water pipes.

However, the RTV silicone rubber composition had an aesthetic problem that the surface of the cured sealant or coating material is easily smudged with time since the organopolysiloxane, which is the main component of the composition, tends to be electrically charged to adsorb dusts in the air. In order to solve this problem, JP-A S56-76452 and JP-A S56-76453 propose the addition of a surfactant having polyoxyethylene group, sorbitan residue, disaccharides residue, or the like to the RTV silicone rubber composition. However, in the method proposed, a sufficient effect is achieved only after adding a large amount of the surfactant, and this adversely affects the adhesive properties, namely, the property most important for the sealant or coating material prepared by using the RTV silicone rubber composition.

When an underwater structure is built or such structure goes into service, aquatic organisms living in the ocean and river such as barnacle, ascidian, serpula, Mytilus edulis, Cristaria plicata, sea moss, green laver, and sea lettuce attaches and grows over the surface of the structure from the splash line to the underwater area, causing various damages. For example, when an aquatic organism attaches on the ship, frictional resistance with water increases, and with the decrease in the ship velocity, fuel consumption increases to maintain the velocity, and this is economically disadvantageous. When aquatic organisms attaches on the structure fixed under the water or on the water surface, for example, in the case of harbor facility, function of the structure is no longer fully exerted and the substrate may be eroded. Furthermore, when aquatic organisms attaches on aquaculture fish net or fixed net, mesh is clogged and this may lead to the death of the fish.

Attachment and growth of aquatic organisms on the underwater structures had been prevented by using an anti-fouling paint containing a toxic anti-fouling agent such as organotin compound or cuprous oxide. While attachment and growth of aquatic organisms on the underwater structures could be substantially prevented, the use of such paint was unpreferable in view of environment, safety, and health during its production and coating due to the use of toxic anti-fouling agent. In addition, the toxic anti-fouling agent gradually dissolves from the coating in the water, and the use of such paint was legally banned in view of the long term risk of the water area contamination.

In the meanwhile, paints which have the effect of preventing attaching and growing of the aquatic organisms and not containing any toxic anti-fouling agent have also been proposed. JP-A S58-13673 and JP-A S62-84166 propose a non-toxic anti-fouling paint prepared by adding liquid paraffin or petrolatum in the RTV silicone rubber composition, and anti-fouling property is realized by reducing the surface tension. Japanese Patent Nos. 2503986 and 2952375 propose a non-toxic anti-fouling paint composition wherein a non-reactive and hardly compatible polar group-containing silicone resin bleeds onto the surface through volume shrinkage in the course of the curing of the reaction curable silicone resin to contribute for the anti-fouling property together with the reduced surface tension of the reaction curable silicone resin. However, this non-toxic anti-fouling paint composition had environmental, safety, and health problems due to the bleeding of either a silicone resin having polyoxyethylene group wherein a hardly compatible, non-reactive polar group-containing silicone resin is added to the ethylene oxide or propylene oxide to the Si atom by C-C bond or a silicone resin having an alkoxy group introduced on the Si atom at the molecular end via ethylene oxide or propylene oxide group.

As described above, the effect of preventing the attaching of the aquatic organisms, namely, the anti-biofouling effect had been improved, while adhesion to the substrate should be improved for practical use of the composition. More specifically, the adhesion was insufficient since oil was present between the coating material and the substrate due to the bleeding of the silicone resin, and the adhesion tended to be insufficient with the increase in the anti-biofouling effect.

The present invention has been accomplished in view of the situation as described above. An object herein is to provide new and useful room temperature vulcanizable organopolysiloxane compositions which exhibit excellent anti-fouling performance for a prolonged period and improved adhesion to the substrate. Another object of the present invention is to provide a method for producing such room temperature vulcanizable organopolysiloxane composition, and an article coated by such composition.

In order to achieve the object as described above, the inventors of the present invention conducted an intensive study on the adhesive properties of the composition to the substrate and found that when a compound having a particular guanidyl group is blended in a de-oxime type RTV silicone rubber composition, the resulting composition exhibits good adhesion to the substrate, and in particular, to a substrate having an epoxy coating or a silicone coating coated thereon, and furthermore, that the resulting cured coating still exhibits excellent rubber strength and surface smoothness as well as excellent long term anti-fouling performance.

In other words, the inventors made an intensive study for developing a composition capable of forming an anti-fouling coating having an excellent long term anti-fouling performance from which attached aquatic organisms can be readily removed, and furthermore, on a composition showing sufficient adhesion to the substrate. It should be noted that the anti-fouling performance and the adhesion to the substrate are contradictory to each other, and there has so far been no composition which has simultaneously realized both the anti-fouling performance and the adhesion to the substrate.

After various investigations, the inventors of the present invention found that a composition showing excellent adhesion to the substrate can be realized without sacrificing the surface smoothness of the cured coating which is effective for realizing the anti-fouling property by adding a compound having a particular guanidyl group to a de-oxime type RTV silicone rubber composition as an adhesion aid. The inventors also confirmed that this composition does not experience loss of adhesiveness when a bleed oil or a solvent is added to this composition even though an anti-fouling paint containing a bleed oil normally exhibits poor adhesion to the substrate especially when compared to a composition not containing a bleed oil, and improvement of the adhesion by the addition of known adhesive aids had been impossible.

Examples of the prior art use of the compound having a guanidyl group in the silicone composition include curing catalyst for an acetone curing type composition (JP-A S54-11953 and JP-A 2003-12927), provision of antifungal property (JP-A S57-18758), and catalyst for foam formation (JP-A S63-43934). A non-relevant example of the prior art use of the curing catalyst to an anti-fouling paint composition include curing catalyst JP-A 2010-65182.

These prior art literatures included no indication of the effect as an adhesive aid which is the object of the present invention, and the effect of an adhesive aid functioning for the purpose of improving the adhesion to the substrate have never been examined.

Accordingly, the inventors of the present invention found that when a compound having guanidyl group is incorporated in the RTV organopolysiloxane composition as an adhesive aid, the cured coating produced by using the composition exhibits excellent rubber strength and surface smoothness as well as adhesion to the substrate, and that, when the cured coating of the composition is formed on the surface of an underwater structure, attachment and growth of aquatic organisms on the surface of the underwater structure is prevented and the effects is highly sustainable. The present invention has been completed on the bases of such finding.

In view of the situation as described above, the present invention provides a room temperature vulcanizable organopolysiloxane composition, its production method, and an article coated by the cured composition as described below.
[1] A room temperature vulcanizable organopolysiloxane composition having excellent adhesion to a substrate, comprising
   (A) 100 parts by weight of a diorganopolysiloxane having at least two hydroxy groups and/or hydrolyzable groups bonded to silicon atom per molecule,
   (B) 0.5 to 30 parts by weight of a silane having at least two oxime groups bonded to silicon atom per molecule, and/or its partial hydrolytic condensate,
   (C) 0.01 to 10 parts by weight of a hydrolyzable organosilicon compound having a monovalent group represented by the following general formula (1): 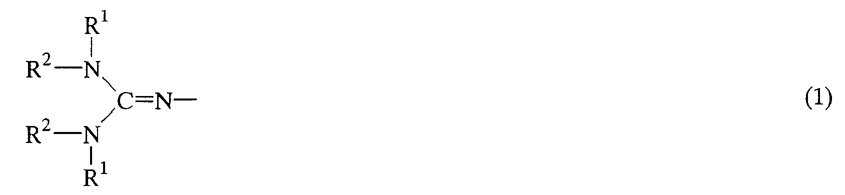 wherein R¹ and R² are independently hydrogen atom or a monovalent hydrocarbon group, or its partial hydrolysate,
   (D) 0.5 to 200 parts by weight of a silica, and
   (E) 1 to 300 parts by weight of a bleed oil.
[2] A room temperature vulcanizable organopolysiloxane composition according to [1] wherein the component (C) has the following formula (4): 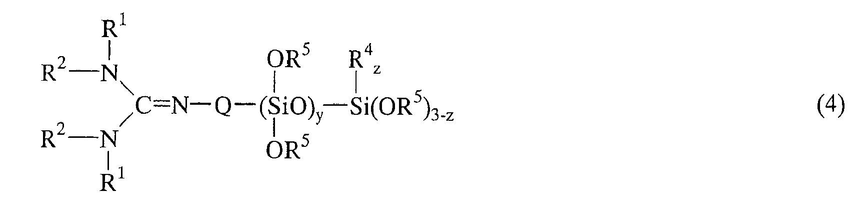 wherein R¹ and R² are as defined above, Q is an alkylene group containing 1 to 6 carbon atoms optionally having an intervening ether bond oxygen atom, R⁴ is independently hydrogen atom, a monovalent hydrocarbon group containing 1 to 10, or OSiR⁴_{b}(OR⁵)_{3-b} wherein b is 0, 1, or 2, R⁵ is hydrogen atom or a monovalent hydrocarbon group containing 1 to 10 optionally containing nitrogen atom; y is an integer of 0 or 1 to 5, and z is 0, 1, or 2.
[3] A room temperature vulcanizable organopolysiloxane composition according to [1] or [2] wherein the component (D) is selected from among a dimethyl silicone oil wherein the methyl groups are not substituted, a dimethyl silicone oil wherein the methyl groups are partly substituted with phenyl group, an amino-modified silicone oil substituted with a monoamine, a diamine, or an amino-polyether group; an epoxy-modified silicone oil substituted with epoxy, an alicyclic epoxy, an epoxy-polyether or an epoxy-aralkyl group; a carbinol-modified silicone oil substituted with a carbinol group; a mercapto-modified silicone oil substituted with a mercapto group; a carboxyl-modified silicone oil substituted with a carboxyl group; a methacryl-modified silicone oil substituted with methacryl group; a polyether-modified silicone oil substituted with a polyether or a polyether-long chain alkyl-aralkyl group; a long chain alkyl-modified silicone oil substituted with a long chain alkyl or a long chain alkyl-aralkyl group; a higher fatty acid-modified silicone oil substituted with a higher fatty acid ester group; and a fluoroalkyl-modified silicone oil substituted with a fluoroalkyl group,
   said component having a viscosity at 25°C of 20 to 30,000 mPa·s.
[4] A room temperature vulcanizable organopolysiloxane composition according to any one of [1] to [3] further comprising
   (F) a silane coupling agent containing a primary and/or secondary amino group or epoxy group.
[5] A room temperature vulcanizable organopolysiloxane composition according to [4] wherein the component (F) is N-(2-aminoethyl)-3-aminopropyltrimethoxysilane, 3-(N-aminomethylbenzylamino)propyltrimethoxysilane, or N,N'-bis[3-(trimethoxysilyl)propyl]ethylenediamine.
[6] A method for producing a room temperature vulcanizable organopolysiloxane composition of any one of [1] to [5] comprising the steps of mixing the components (A) and (D) with heating, and adding components (B) and (C) to the mixture.
[7] An article comprising a substrate having its outermost layer covered with a cured layer of the room temperature vulcanizable organopolysiloxane composition of any one of [1] to [5].
[8] The article according to [7] wherein the substrate is a substrate covered by a silicone coating or an epoxy coating.
[9] The article according to [7] or [8] wherein the article is an underwater structure.
[10] Methods of coating to make such articles or structures.

### ADVANTAGEOUS EFFECTS OF THE INVENTION

We find that the RTV organopolysiloxane compositions disclosed herein have low viscosity, and the resulting cured coating has well balanced properties including the rubber strength and surface smoothness. When this composition is used as a coating material, and in particular, as a coating composition, it exhibits excellent spray coating capability, and a coating with consistent thickness having excellent coating strength and coating hardness is formed by the spray coating, and when the composition is used as an anti-fouling paint, excellent anti-fouling performance is retained for a long period. The RTV organopolysiloxane composition of the present invention is particularly adapted for use in coating an underwater structure to prevent adhesion of aquatic organisms onto the surface of the underwater structure, and the anti-fouling effect is highly sustainable.

### FURTHER EXPLANATIONS; OPTIONS AND PREFERENCES

The room temperature vulcanizable organopolysiloxane composition contains
(A) 100 parts by weight of a diorganopolysiloxane having at least two hydroxy groups and/or hydrolyzable groups bonded to the silicon atom per molecule,
(B) 0.5 to 30 parts by weight of a silane having at least two oxime groups bonded to silicon atom per molecule, and/or its partial hydrolytic condensate,
(C) 0.01 to 10 parts by weight of a hydrolyzable organosilicon compound having a monovalent group represented by the following general formula (1): 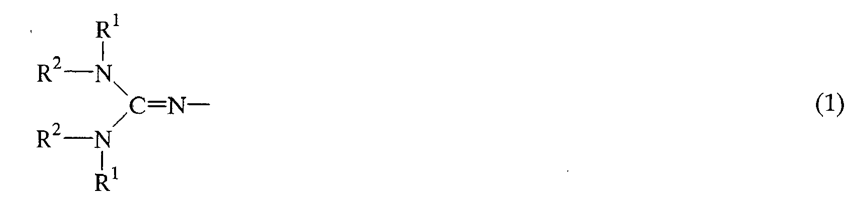 wherein R¹ and R² are independently hydrogen atom or a monovalent hydrocarbon group, or its partial hydrolysate,
(D) 0.5 to 200 parts by weight of a silica, and
(E) 1 to 300 parts by weight of a bleed oil.
The method for producing the composition comprises the steps of heating and mixing the components (A) and (D), and adding components (B) and (C).

### Component (A)

The component (A) of the present invention is a diorganopolysiloxane having at least two hydroxy groups and/or hydrolyzable groups bonded to the silicon atom per molecule. This component is the main component (the base polymer) of the RTV organopolysiloxane composition. The diorganopolysiloxane of the component (A) preferably comprises a diorganopolysiloxane having both ends of the molecular chain capped by a hydroxy group and/or a hydrolyzable group represented by the following general formula (2): 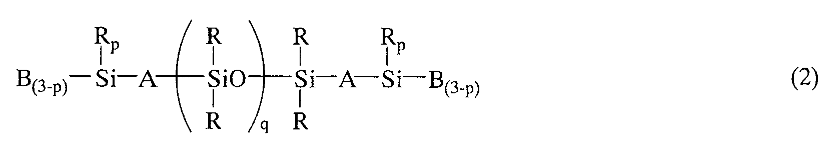 wherein R is independently a substituted or unsubstituted monovalent hydrocarbon group, A is independently oxygen atom or a divalent hydrocarbon group containing 1 to 8 carbon atoms, B is independently hydroxy group or a hydrolyzable group, p is 2 when B is hydroxyl group and 0 or 1 when B is a hydrolysable group, and q is a number that would realize a viscosity at 25°C of 20 to 20,000 mPa·s.

In the formula (2), the substituted or unsubstituted monovalent hydrocarbon group R is preferably a monovalent hydrocarbon group containing 1 to 12 carbon atoms, and more preferably 1 to 10 carbon atoms. Examples of such R include alkyl groups such as methyl group, ethyl group, propyl group, butyl group, pentyl group, hexyl group, heptyl group, octyl group, nonyl group, decyl group, and dodecyl group; cycloalkyl groups such as cyclopentyl group and cyclohexyl group; alkenyl groups such as vinyl group, allyl group, butenyl group, pentenyl group, and hexenyl group; aryl groups such as phenyl group, tolyl group, xylyl group, and α -, β-naphthyl group; aralkyl groups such as benzyl group, 2-phenylethyl group, and 3-phenylpropyl group; and any of these groups wherein a part or all of the hydrogen atoms have been substituted with a halogen atom such as F, Cl, or Br or cyano group, for example, 3-chloropropyl group, 3,3,3-trifluoropropyl group, and 2-cyanoethyl group. Among these, the preferred are methyl group, vinyl group, and phenyl group, and the most preferred is methyl group.

A is oxygen atom or a divalent hydrocarbon group containing 1 to 8 carbon atoms, and preferably 2 to 4 carbon atoms; and examples of the divalent hydrocarbon group include alkylene groups such as methylene group, ethylene group, propylene group, methylethylene group, butylene group, and hexamethylene group; cycloalkylene groups such as cyclohexylene group; arylene groups such as phenylene group, tolylene group, and xylylene group; any of these groups wherein a part or all of the hydrogen atoms have been substituted with a halogen atom; and a group which is a combination of the alkylene group and the arylene group. A is preferably oxygen atom or ethylene group.

Examples of the hydrolyzable group B at the end of the molecular chain of the organopolysiloxane other than the hydroxy group include alkoxy groups such as methoxy group, ethoxy group, and propoxy group; alkoxyalkoxy groups such as methoxyethoxy group, ethoxyethoxy group, and methoxypropoxy group; acyloxy groups such as acetoxy group, octanoyloxy group, and benzoyl oxy group; alkenyloxy groups such as vinyloxy group, isopropenyloxy group, and 1-ethyl-2-methylvinyloxy group; ketoxime groups such as dimethylketoxime group, methylethylketoxime group, and diethylketoxime group; amino groups such as dimethylamino group, diethylamino group, butylamino group, and cyclohexyl amino group; aminoxy groups such as dimethylaminoxy group and diethylaminoxy group; and amide groups such as N-methylacetamide group, N-ethylacetamide group, and N-methylbenzamide group. B is preferably hydroxy group or an alkoxy group.

The component (A) does not include the guanidyl group represented by the formula (1).

The organopolysiloxane of the component (A) preferably has a viscosity at 25°C of 20 to 20,000 mPa·s, more preferably 100 to 10,000 mPa·s, and more preferably 500 to 5,000 mPa·s. When the viscosity is too low, formation of a coating film having excellent physical and mechanical strength would be difficult while an excessively high viscosity would result in the excessively high viscosity of the composition to adversely affect the workability of the during its use. In the present invention, the viscosity may be measured by a rotary viscometer (and this also applies to the following description).

Examples of the organopolysiloxane of the component (A) include those represented by the following formulae: 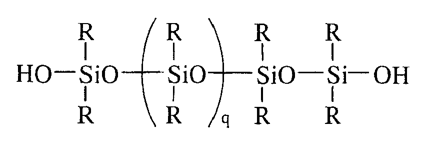 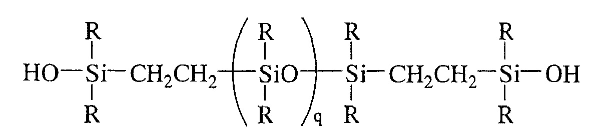 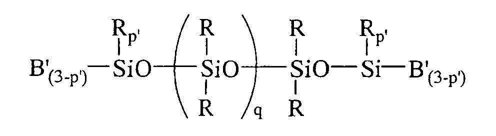 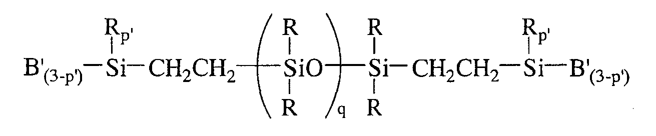 wherein R and q are as defined above, B' is a hydrolyzable group, and p' is 0 or 1.

These may be used alone or in combination of two or more.

### Component (B)

The component (B) of the present invention is a silane having at least two oxime groups bonded to the silicon atom per molecule and/or its partial hydrolytic condensate. This component is a component critical for the curing of the composition of the present invention.

The silane and/or its partial hydrolytic condensate of the component (B) is not particularly limited as long as it has at least two oxime groups per molecule, and the molecule preferably has at least 3, and more preferably 3 to 6 oxime groups. The silicon atom may also have bonded thereto a hydrolyzable group other than the oxime group such as an alkoxy group, an acetoxy group, or isopropenoxy group. The molecular structure may be either silane structure or siloxane structure, and in the case of the siloxane structure, it may have a straight chain, branched, or cyclic structure.

The component (B) does not include the guanidyl group represented by the formula (1).

Such component (B) may be an oxime silane represented by the following general formula (3):

R³ₐSiX₄₋ₐ (3)

wherein R³ is independently a substituted or unsubstituted monovalent hydrocarbon group containing 1 to 6 carbon atoms, X is independently an oxime group, a is 0, 1, or 2, and preferably 0 or 1; and/or it partial hydrolytic condensate.

In the formula (3), examples of the oxime group X include methylethylketoxime group, dimethylketoxime group, diethylketoxime group, methylisopropylketoxime group, cyclohexanoxime group, and methylisobutylketoxime group.

In the formula (3), the group R³ which is not the oxime group is a substituted or unsubstituted monovalent hydrocarbon group containing 1 to 10, and preferably 1 to 6 carbon atoms. Examples include alkyl group such as methyl group, ethyl group, propyl group, butyl group, pentyl group, and hexyl group; cycloalkyl groups such as cyclopentyl group and cyclohexyl group; phenyl group; alkenyl groups such as vinyl group, allyl group, butenyl group, pentenyl group, and hexenyl group; and halogenated alkyl groups such as 3,3,3-trifluoropropyl group and 3-chloropropyl group. Among these, the preferred are methyl group, ethyl group, phenyl group, and vinyl group.

Examples of the silane having at least two oxime groups bonded to the silicon atom per molecule, and/or its partial hydrolytic condensate which is the component (B) of the present invention include
methyltri(methylethylketoxime)silane,
vinyltri(methylethylketoxime)silane,
phenyltri(methylethylketoxime)silane,
propyltri(methylethylketoxime)silane,
tetra(methylethylketoxime)silane,
3,3,3-trifluoropropyltri(methylethylketoxime)silane,
3-chloropropyltri(methylethylketoxime)silane,
methyltri(dimethylketoxime)silane,
methyltri(diethylketoxime)silane,
methyltri(methylisopropylketoxime)silane,
methyltri(cyclohexanoxime)silane, and
their partial hydrolytic condensates, which may be used alone or in combination of two or more.

The component (B) may be incorporated at an amount of 0.5 to 30 parts by weight, and preferably at 1 to 10 parts by weight in relation to 100 parts by weight of the component (A). The crosslinking will be insufficient when incorporated at an amount of less than 0.5 parts by weight, while incorporation in excess of 30 parts by weight results in the unduly hard cured product as well as economical disadvantage.

### Component (C)

Component (C) has the function of improving the adhesion, and is hydrolysable organosilicon compound having guanidyl group, represented by general formula (1): 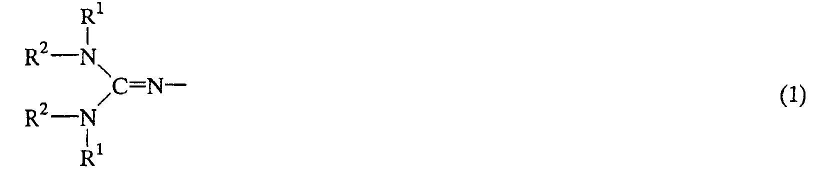 wherein R¹ and R² independently are H or monovalent hydrocarbon group, or partial hydrolysate of such compound. This component is critical for adhesion of the composition to a substrate. In one aspect the invention provides the use of component (C), in a composition additionally comprising (A), (B), (D), (E) and optionally any optional components disclosed herein, to enhance the adhesiveness of the composition, especially for uses exposed to water e.g. anti-fouling use.

In the formula (1), the monovalent hydrocarbon groups R¹ and R² are independently the one containing 1 to 10, and more preferably 1 to 8 carbon atoms. Examples include alkyl groups such as methyl group, ethyl group, propyl group, and butyl group, alkenyl groups such as vinyl group and allyl group, aryl groups such as phenyl group and tolyl group, aralkyl groups such as benzyl group and 2-phenylethyl group, and any of these groups wherein a part or all hydrogen atoms have been substituted with a halogen atom such as chloromethyl group and 3,3,3-trifluoropropyl group.

The intervening group between the guanidyl group of formula (1) and the silicon atom is not particularly limited, and the guanidyl group is preferably bonded to the silicon atom via an alkylene group or an oxyalkylene group.

Examples of the organosilicon compound of the component (C) include those represented by the following general formula (4): 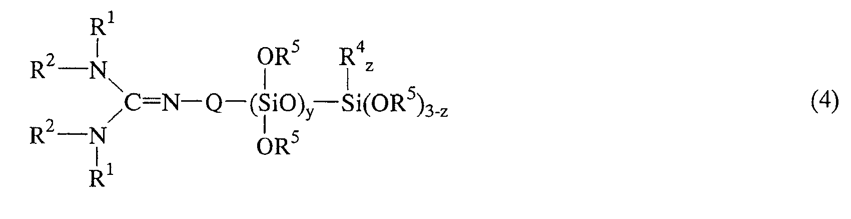 wherein R¹ and R² are as defined above, Q is an alkylene group containing 1 to 6 carbon atoms optionally having an intervening ether bond oxygen atom, R⁴ is independently hydrogen atom, a monovalent hydrocarbon group containing 1 to 10, and preferably 1 to 8 carbon atoms, or OSiR⁴_{b}(OR⁵)_{3-b} (wherein b is 0, 1, or 2), R⁵ is hydrogen atom or a monovalent hydrocarbon group containing 1 to 10, and preferably 1 to 8 carbon atoms optionally containing nitrogen atom; y is an integer of 0 or 1 to 5, and z is 0, 1, or 2.

In the formula (4), Q is an alkylene group containing 1 to 6 , and preferably 2 to 4 carbon atoms optionally with an intervening ether bond oxygen atom. Examples of such group include alkylene groups such as methylene group, ethylene group, propylene group, methylethylene group, butylene group, and hexamethylene group, and alkyleneoxyalkylene groups such as methyleneoxyethylene group, methyleneoxypropylene group, methyleneoxybutylene group, and ethyleneoxyethylene group.

R⁴ is hydrogen atom, a monovalent hydrocarbon group containing 1 to 10, and preferably 1 to 8 carbon atoms, or -OSiR⁴_{b}(OR⁵)_{3-b} wherein b is 0, 1, or 2. Examples of the monovalent hydrocarbon group include alkyl groups such as methyl group, ethyl group, propyl group, and butyl group, alkenyl groups such as vinyl group, allyl group, propenyl group, isopropenyl group, and butenyl group, aryl groups such as phenyl group and tolyl group, and aralkyl groups such as benzyl group and 2-phenylethyl group. R⁴ is preferably methyl group, ethyl group, or propyl group.

R⁵ is hydrogen atom or a monovalent hydrocarbon group containing 1 to 10, and preferably 1 to 8 carbon atoms optionally containing nitrogen atom, and examples of the monovalent hydrocarbon group are the same as those mentioned for the R⁴. Examples of the monovalent hydrocarbon group containing the nitrogen atom include -N=C(CH₃)₂, -N=C(CH₃)C₂H₅, and -N=C(C₂H₅)₂, and examples of the OR⁵ include hydroxy group, alkoxy group, alkenyloxy group, and ketoxime group. R⁵ is preferably methyl group, ethyl group, propyl group, butyl group, isopropenyl group, or -N=C(CH₃)C₂H₅ group.

y is an integer of 0 or 1 to 5, preferably an integer of 0 or 1 to 3, and z is 0, 1, or 2, and preferably 0 or 1.

Examples of the component (C) include those represented by the following formulae:

(Me₂N)₂C=N-(CH₂)₃-Si(OMe)₃

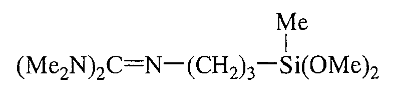

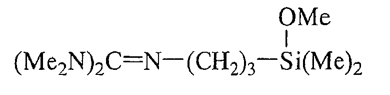

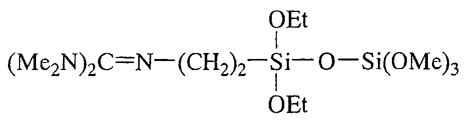

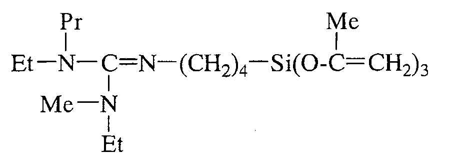

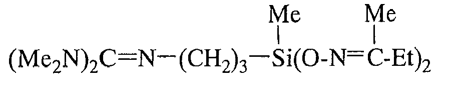

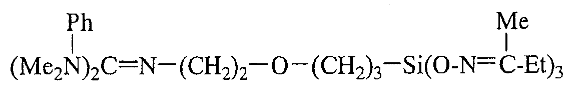

wherein Me is methyl group, Et is ethyl group, Pr is propyl group, and Ph is phenyl group.

Among these, the preferred are the organosilicon compound represented by the following formula:

(Me₂N)₂C=N-(CH₂)₃-Si(OMe)₃

in view of the ease of synthesis.

The component (C) may be incorporated at an amount of 0.01 to 10 parts by weight, and preferably at 0.1 to 5 parts by weight in relation to 100 parts by weight of the component (A). Excessively low content of the component (C) may be insufficient for improving the adhesion while excessive incorporation may result in the discoloration of the cured product as well as economical disadvantage.

### Component (D)

The silica which is the component (D) of the present invention is preferably a hydrophobic silica or a hydrophilic silica having a specific surface area as measured by BET method of at least 10 m²/g, and the use of a hydrophilic silica is preferable. Exemplary silicas include wet process silica (for example, fine powder silica, high purity silica, colloidal silica, and calcium silicate) and wet process silica (for example, spherical silica and fumed silica). The silica which has not been surface treated is called hydrophilic silica, and if such silica is surface treated, the silica is then called hydrophobic silica (hydrophobic wet process silica or hydrophobic dry process silica). In the present invention, both or either one of the hydrophobic silica and hydrophilic silica may be used.

Use of the silica having the BET specific surface area of less than 10 m²/g may result in the insufficient coating film (rubber) strength.

In the present invention, the silica component may be those having the properties as described below.

Of the silica component (D), the wet process silica is generally the one having an adsorbent moisture content (also referred to as the moisture content) of about 4 to 8% by weight, a bulk density of 200 to 300 g /L, primary particle size of 10 to 30 µm, and a specific surface area (BET surface area) of at least 10 m²/g, preferably 30 to 800 m²/g, and more preferably about 50 to 300 m²/g.

The hydrophobic wet process silica is the one prepared by surface treating the wet process silica with an organosilicon compound such as methyltrichlorosilane, dimethyldichlorosilane, hexamethyldisilazane, hexamethylcyclotrisiloxane, or octamethylcyclotetrasiloxane. The hydrophobic wet process silica experiences reduced moisture adsorption with time, and it may have a bulk density of 200 to 300 g /L, a primary particle size of 1 to 30 µm, and a specific surface area (BET surface area) of at least 10 m²/g, preferably 30 to 800 m²/g, and more preferably 50 to 300 m²/g.

The dry process silica typically has a moisture content of up to 1.5% by weight. More specifically, the dry process silica has a initial moisture content, for example, a moisture content immediately after the production of as low as, for example, 0.3% by weight, and when it is left, the moisture content gradually increases by absorbing the moisture, and the moisture content at several months after the production is, for example, about 0.5 to 1.0% by weight. The bulk density of the dry process silica is not determined unconditionally since the bulk density differs by the type. However, the silica may have a bulk density of, for example, 50 to 100 g /L, a primary particle size of 8 to 20 µm, and a specific surface area (BET surface area) of at least 10 m²/g, preferably 20 to 400 m²/g, and more preferably about 30 to 300 m²/g.

The hydrophobic dry process silica is the silica produced by surface treating the dry process silica with an organosilicon compound such as methyl trichlorosilane, dimethyldichlorosilane, hexamethyldisilazane, hexamethylcycrotrisiloxane, and octamethylcyclotetrasiloxane, and it experiences reduced moisture absorption with time, and the moisture content is typically 0.3% by weight or less, and in most cases, 0.1 to 0.2% by weight. The specific surface area (BET surface area) is not particularly limited as long as it is at least 10 m²/g. However, the specific surface area is preferably 30 to 400 m²/g, and more preferably 50 to 300 m²/g, and the primary particle size is 5 to 50 µm, and the bulk density is 50 to 100 g/L.

In the case of the hydrophobic dry process silica (heat treated hydrophobic dry process silica) which has been heat treated with the component (A), the moisture that had been present on the silica surface has been physically minimized and removed, and the moisture content is typically up to 0.2% by weight, preferably up to 0.1% by weight, and most preferably 0.05 to 0.1% by weight, and the bulk density and other physical property values are similar to the hydrophobic dry process silica as described above.

For present purposes the moisture content may be as measured by heating and measuring the weight loss, the bulk density may be measured by measuring tapped density, and the primary particle size may be measured by using an electron microscope.

The component (D) as described above may be incorporated at 0.5 to 200 parts by weight, typically at 0.5 to 100 parts by weight, preferably at 1 to 50 parts by weight, and more preferably at 3 to 30 parts by weight in relation to 100 parts by weight of the component (A). When the silica of the component (D) is included in the composition at such amount, the composition will have excellent coating film strength and hardness, favorable thixotropy, and adequate viscosity, and coating, in particular, spray coating can be conducted to deposit a sufficient thickness, for example, even on a vertical substrate surface by coating once. When the content of the component (D) is below such range, sufficient coating film strength and hardness as well as desired thixotropy are not obtained, and intended coating thickness can not be accomplished by one coating especially in the case of spray coating. Content of the component (D) in excess of such range results in excessively high viscosity and dilution with a thinner or other solvent to a viscosity adequate for the coating is required, and intended coating thickness can not be accomplished by one coating.

### Component (E)

The component (E) of the present invention is a bleed oil. This component is necessary for the antifouling property of the RTV organopolysiloxane composition of the present invention, and the bleed oil is not particularly limited as long as the non-reactive (non-condensation reactive) backbone which does not undergo condensation reaction with the diorganopolysiloxane of the component (A) is siloxane skeleton, and has a substituent different from that of the component (A), and the silicone oil bleeds from the cured composition.

Examples include a dimethyl silicone oil wherein the methyl groups are not substituted, a dimethyl silicone oil wherein the methyl groups are partly substituted with phenyl group, an amino-modified silicone oil substituted with a monoamine, a diamine, or an amino-polyether group; an epoxy-modified silicone oil substituted with epoxy, an alicyclic epoxy, an epoxy-polyether or an epoxy-aralkyl group; a carbinol-modified silicone oil substituted with a carbinol group; a mercapto-modified silicone oil substituted with a mercapto group; a carboxyl-modified silicone oil substituted with a carboxyl group; a methacryl-modified silicone oil substituted with methacryl group; a polyether-modified silicone oil substituted with a polyether or a polyether-long chain alkyl-aralkyl group; a long chain alkyl-modified silicone oil substituted with a long chain alkyl or a long chain alkyl-aralkyl group; a higher fatty acid-modified silicone oil substituted with a higher fatty acid ester group; and a fluoroalkyl-modified silicone oil substituted with a fluoroalkyl group. Among these, the preferred are methylphenylsilicone oil, long chain alkyl-modified silicone oil, and polyether-modified silicone oil substituted with a polyether-long chain alkyl-aralkyl group.

The component (E) may preferably have a viscosity at 25°C of 20 to 30,000 mPa·s, and more preferably 50 to 10,000 mPa·s. When the viscosity at 25°C is too low, the antifouling durability may be insufficient, while excessively high viscosity may result in the excessively high viscosity of the composition, and hence poor workability.

In the present invention, such silicone oil may be used alone or in combination of two or more.

The component (E) may be incorporated at 1 to 300 parts by weight, and preferably at 10 to 200 parts by weight in relation to 100 parts by weight of the component (A). When the composition containing the silicone oil at a content in such range is used as an anti-fouling coating composition, the resulting (anti-fouling) coating will enjoy both excellent anti-fouling property and excellent coating strength. When the content is below such range, the resulting (anti-fouling) coating will have poor anti-fouling property, while content in excess of such range will result in the loss of coating strength as well as poor adhesion to the substrate.

### Component (F)

The composition of the present invention may further contain a silane coupling agent containing primary and/or secondary amino group or epoxy group as component (F). Incorporation of this silane coupling agent has the effect of further improving the adhesion to the silicone coating. It is to be noted that the component (F) does not contain the guanidyl group represented by the formula (1).

Examples of such silane coupling agent include primary or secondary amino group-containing a silane coupling agents such as N-(2-aminoethyl)-3-aminopropyltrimethoxysilane, N-(2-aminoethyl)-3-aminopropyltriethoxysilane, 3-aminopropyltrimethoxysilane, 3-aminopropyltriethoxysilane, 3-(N-aminomethylbenzylamino)propyltrimethoxysilane, and N,N'-bis[3-(trimethoxysilyl)propyl]ethylenediamine, and epoxy group-containing silane coupling agents such as 3-glycidoxypropyltrimethoxysilane, 3-glycidoxypropyltriethoxysilane, and 3-glycidoxypropylmethyl diethoxysilane. Among these, the preferred are N-(2-aminoethyl)-3-aminopropyltrimethoxysilane, 3-(N-aminomethylbenzylamino)propyltrimethoxysilane, and N,N'-bis[3-(trimethoxysilyl)propyl]ethylenediamine.

When the component (F) is incorporated, it may be incorporated at an amount of 0.05 to 20 parts by weight, and preferably at 0.1 to 10 parts by weight in relation to 100 parts by weight of the component (A). Excessive incorporation may result in the retarded coating formation (tack free) immediately after the production or later as well as coloring of the cured product, while the effect of adhesion improvement may not be realized by the insufficient incorporation.

### Other components

A catalyst may be added to the composition of the present invention to accelerate the curing. Such curing catalyst may be any catalyst which is used in the condensation curable room temperature vulcanizable composition, and exemplary catalysts include metal salts of an organic carboxylic acid such as lead-2-ethyl octoate, dibutyltin dioctoate, dibutyltin acetate, dibutyltindilaurate, butyltin-2-ethyl hexoate, iron -2-ethyl hexoate, cobalt-2-ethyl hexoate, manganese-2-ethyl hexoate, zinc-2-ethyl hexoate, stannous caprylate, stannous naphthenate, tin oleate, tin butanate, titanium naphthenate, zinc naphthenate, cobalt naphthenate, and zinc stearate; organotitanate esters such as tetrabutyl titanate, tetra-2-ethylhexyl titanate, triethanolamine titanate, and tetra(isopropenyloxy)titanate; organotitanium compounds and organotitanium chelates such as organosiloxy titanium, β -carbonyl titanium, titanium diisopropoxybis(ethyl acetoacetate), and titanium tetra(acetyl acetonate); alkoxy aluminum compound; amine compounds such as hexylamine and dodecylamine phosphate; lower fatty acid salts of an alkaline metal such as potassium acetate, sodium acetate, and lithium oxalate; and dialkylhydroxylamines such as dimethylhydroxylamine and diethylhydroxylamine, which may be used alone or in combination of two or more.

When such curing catalyst is used, the amount used is not particularly limited, and a catalytic amount may be used. The curing catalyst is typically used at 0.01 to 20 parts by weight, and more preferably at 0.1 to 10 parts by weight in relation 100 parts by weight of the component (A). When this catalyst is used and the content of the catalyst is below such range, curability of the resulting composition may be insufficient depending of the type of the crosslinking agent, while content in excess of such range may result in the insufficient storage stability of the resulting composition.

The composition of the present invention may also contain a filler for the purpose of reinforcement or volume expansion. Exemplary such fillers include quarts, diatomaceous earth, titanium oxide, aluminum oxide, lead oxide, iron oxide, carbon black, bentonite, graphite, calcium carbonate, mica, clay, glass beads, glass microballoons, shirasu balloons, glass fiber, polyvinyl chloride beads, polystyrene beads, and acryl beads.

When the filler is used, it may be used at a non-limited amount. However, the filler is typically used at 1 to 50 parts by weight, and more preferably at 5 to 30 parts by weight in relation to 100 parts by weight of the component (A). When such filler is used, use of the filler at an amount less than such lower limit may result in the loss of
rubber property after the curing while use of the filler in excess of the upper limit results in excessively high viscosity of the composition, and hence, poor workability in the mixing and application.

If desired, the composition of the present invention may also contain a predetermined amount of a plasticizer, a cololant such as pigment, a flame retardant, a thixotropic agent, an antibacterial or antifungal agent, or an adhesion improver at an amount not adversely affecting the advantages of the present invention.

### Production of the room temperature vulcanizable organopolysiloxane composition

The room temperature vulcanizable organopolysiloxane composition of the present invention is produced by preliminarily mixing the component (A) and the component (D) at normal pressure or at a reduced pressure with heating preferably to a temperature of at least 50°C and lower than the thermal decomposition temperature of the blended component, more preferably to 80 to 300°C, and most preferably to 100 to 200°C typically for about 30 minutes to 3 hours, and then mixing the remaining components. Addition of the remaining components may be carried out typically at up to 80°C, preferably at up to 50°C, and more preferably at room temperature (a temperature not requiring heating or cooling). In the mixing of the component (A) with the component (D) and the following heat treatment, either all or a part of the component (A) may be used, and preferably, half or more of the component (A) may be used in this step.

Such preliminary mixing of a part or all of the component (A) with the component (D) and the following heating ensures surface smoothness of the cured coating and viscosity stabilization with time.

The bleed oil component (E) is mixed after the heat treatment of the component (A) and the component (D) typically at a temperature of up to 80°C, preferably up to 50°C, and more preferably at room temperature (15 to 45°C). The mixing of the component (E) may be conducted either simultaneously with the mixing of other remaining components, or prior to or after the mixing of other remaining components.

When the composition produced by the production method of the present invention is used as coating material or coating composition, and in particular, as an anti-fouling coating composition, excellent stability during the preparation and the storage is realized, and the resulting coating has well balanced rubber properties such as hardness, tensile strength, and elongation. When the coating is used as an anti-fouling coating, the coating exhibits excellent anti-fouling property.

The composition produced by the production method of the present invention is particularly well adapted for use on a substrate coated with an epoxy coating composition and a substrate coated with a silicone coating composition to realize excellent adhesion.

The composition of the present invention can be prepared to have a viscosity at 25°C of up to 200,000 mPa·s, and in particular, up to 150,000 mPa·s, and more specifically, 100 to 100,000 mPa·s, which is suitable for the coating.

The composition produced by the production method of the present invention is highly adapted for use in applications such as coating materials which require water resistance such as ship bottom paint, raceway duct of power plant, and fish net coating; moisture resistant coating materials which require moisture resistance such as LCD and PDP; adhesive sealants between cable and the resin coating; adhesive sealants between resin case or resin connector and the cable; and adhesive sealants of reduced pressure chamber or pressurized chamber; and among these, the composition is most adapted for use in coating underwater structures such as ship, harbor facility, buoy, pipeline, bridge, offshore base, offshore oil field digging facility, raceway duct of power plant, aquaculture fish net, and fixed net. The coating obtained by curing the composition produced by the production method of the present invention is non-toxic with no environmental problem, and the coating prevents adhesion and growth of aquatic organisms for a prolonged time with excellent anti-fouling properties.

The composition produced by the production method of the present invention may be coated on the substrate at a non-limited coating weight. However, the composition is preferably coated at a coating weight such that the thickness after curing is 10 to 1,000 µm, and more preferably 50 to 500 µm. The composition produced by the production method of the present invention may be coated and cured at room temperature (normal temperature).

### EXAMPLES

Next, the present invention is described in further detail by referring to Examples and Comparative Examples which by no means limit the scope of the present invention. In the Examples and Comparative Examples, "part" is part by weight, viscosity is the value measured by a rotary viscometer at 25°C, and specific surface area is the value measured by BET method.

### Example 1

75 parts of α,ω-dihydroxy-dimethylpolysiloxane having a viscosity of 1,500 mPa·s and 15 parts of fumed silica (product name Aerosil 50 manufactured by Nippon Aerosil Co., Ltd.) having a specific surface area of 50 m²/g were homogeneously mixed, and the mixture was further mixed by heating to 150°C at a reduced pressure for 2 hours. To this mixture, 10 parts of vinyltris(methylethylketoxime)silane and 0.3 part of tetramethylguanidylpropyltrimethoxysilane were added and the mixture was mixed at a reduced pressure until the mixture was homogeneous. To this mixture, 15 parts of a polyether-long chain alkyl-aralkyl-modified silicone oil represented by the following formula (5): 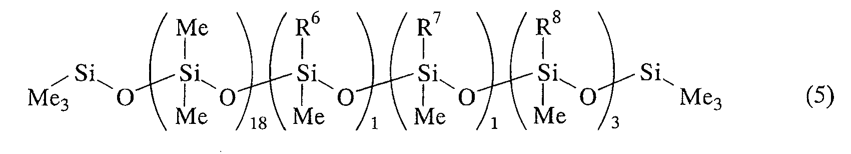 wherein Me is methyl group, R⁶ is 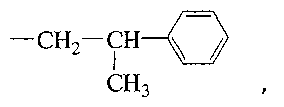 R⁷ is -C₃H₆O(C₂H₄O)₉-COCH₃, and R⁸ is -(CH₂)₇CH₃ (wherein the constitutional repeating units are on average, and the arrangement of the constitutional repeating units are random) was added and the mixture was mixed at a reduced pressure until the mixture was homogeneous.

### Example 2

The procedure of Example 1 was repeated except that the 15 parts of the polyether-long chain alkyl-aralkyl-modified silicone oil was replaced with 15 parts of a dimethyldiphenylsilicone oil having a viscosity of 300 mPa·s to prepare the composition.

### Example 3

The procedure of Example 1 was repeated except that 1.0 part of N-2(aminoethyl)-3-aminopropyltrimethoxysilane was also added to prepare the composition.

### Comparative Example 1

The procedure of Example 1 was repeated except that the 0.3 part of the tetramethylguanidylpropyltrimethoxysilane was replaced with 1.0 part of N-2(aminoethyl)-3-aminopropyltrimethoxysilane to prepare the composition.

### Comparative Example 2

The procedure of Comparative Example 1 was repeated except that the 15 parts of the polyether-long chain alkyl-aralkyl-modified silicone oil was not incorporated to prepare the composition.

### Comparative Example 3

The procedure of Example 2 was repeated except that the 0.3 part of the tetramethylguanidylpropyltrimethoxysilane was replaced with 1.0 part of N-2(aminoethyl)-3-aminopropyltrimethoxysilane to prepare the composition.

### Comparative Example 4

The procedure of Example 1 was repeated except that the 10 parts of the vinyltris(methylethylketoxime)silane was replaced with 8 parts of vinyltris(isopropenoxy)silane to prepare the composition.

### [Performance Test]

The thus obtained compositions were evaluated for their performance according to the test methods as described below.

### [Test method]

### (I) Adhesion:

A substrate was preliminarily coated with an epoxy anticorrosive paint (thickness, 200 µm), and the coated substrate was cured under the conditions of 23°C and 50% RH for 7 days. The composition prepared in the Examples and Comparative Examples was coated on this substrate to a thickness after curing of 200 µm to thereby prepare the coated test piece. The coated test plate was cured under the conditions of 23°C and 50% RH for 7 days. The resulting cured test piece was evaluated for the adhesion by the cross cut test according to JIS K 5600-5-6.

### (II) Adhesion:

A substrate was preliminarily coated with a silicone anticorrosive paint (thickness, 200 µm), and the coated substrate was cured under the conditions of 23°C and 50% RH for 7 days. The composition prepared in the Examples and Comparative Examples was coated on this substrate to a thickness after curing of 200 µm to thereby prepare the coated test piece. The coated test plate was cured under the conditions of 23°C and 50% RH for 7 days. The resulting cured test piece was evaluated for the adhesion by the cross cut test according to JIS K 5600-5-6.

### Criteria for the adhesion (see JIS)

- 0:: no peeling,
- 1:: slight peeling of less than 5%,
- 2:: small peeling of 5% to less than 15%,
- 3:: considerable peeling of 15% to less than 35%,
- 4:: severe peeling of 35% to less than 65%, and
- 5:: degree of the peeling of 65% or higher.

### (III) Anti-fouling properties:

A substrate was preliminarily coated with an epoxy anticorrosive paint (thickness, 200 µm), and the composition prepared in the Examples and Comparative Examples was coated on this substrate to a thickness after curing of 200 µm to thereby prepare the coated test piece. The coated test plate was cured under the conditions of 23°C and 50% RH for 7 days. The resulting cured test piece was suspended in the sea off the coast of Kanagawa prefecture at a depth of 1.5 m for 24 months. Attachment of shells such as barnacles, seaweeds, and the like was observed and the results were evaluated by the following criteria.

### Criteria for the attachment of the aquatic organisms (area percentage):

- A:: 0%
- B:: more than 0% to less than 10%,
- C:: 10% to less than 25%,
- D:: 25% to less than 50%, and
- E:: 50% to 100%.

**Table 1**

| | Example | | | Comparative Example | | | |
|---|---|---|---|---|---|---|---|
| | 1 | 2 | 3 | 1 | 2 | 3 | 4 |
| Adhesion | | | | | | | |
| (I) Epoxy | 0 | 0 | 0 | 4 | 2 | 1 | 4 |
| (II) Silicone | 1 | 0 | 0 | 5 | 5 | 4 | 5 |

| Antifouling properties (III) | | | | | | | |
|---|---|---|---|---|---|---|---|
| 3 months | A | A | A | C | D | c | C |
| 6 months | A | A | A | D | E | D | D |
| 12 months | A | B | A | E | E | E | E |
| 24 months | A | C | B | E | E | E | E |

| | | | | | | | |
|---|---|---|---|---|---|---|---|
| Notes (1) In respect of numerical ranges disclosed in the present description it will of course be understood that in the normal way the technical criterion for the upper limit is different from the technical criterion for the lower limit, i.e. the upper and lower limits are intrinsically distinct proposals. (2) For the avoidance of doubt it is confirmed that in the general description above, in the usual way the proposal of general preferences and options in respect of different features of the compositions, methods, articles and uses constitutes the proposal of general combinations of those general preferences and options for the different features, insofar as they are combinable and compatible and put forward in the same context. | | | | | | | |

## Claims

1. A room temperature vulcanizable organopolysiloxane composition, having adhesiveness to substrates,
comprising
(A) 100 parts by weight of a diorganopolysiloxane having at least two hydroxy groups and/or hydrolyzable groups bonded to silicon atom per molecule,
(B) 0.5 to 30 parts by weight of silane having at least two oxime groups bonded to silicon atom per molecule, and/or partial hydrolytic condensate of such silane,
(C) 0.01 to 10 parts by weight of hydrolyzable organosilicon compound having a monovalent group represented by the following general formula (1): 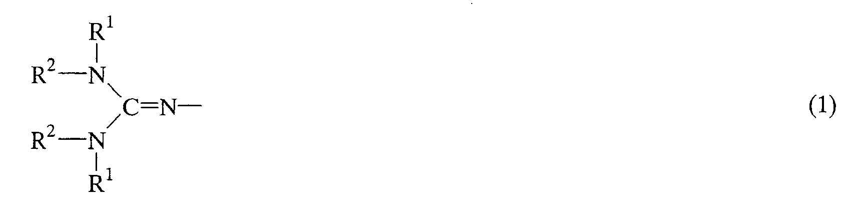 wherein R¹ and R² are independently hydrogen atom or a monovalent hydrocarbon group, or partial hydrolysate thereof,
(D) 0.5 to 200 parts by weight of a silica, and
(E) 1 to 300 parts by weight of a bleed oil.

2. A room temperature vulcanizable organopolysiloxane composition according to claim 1 wherein the component (C) has the following formula (4): 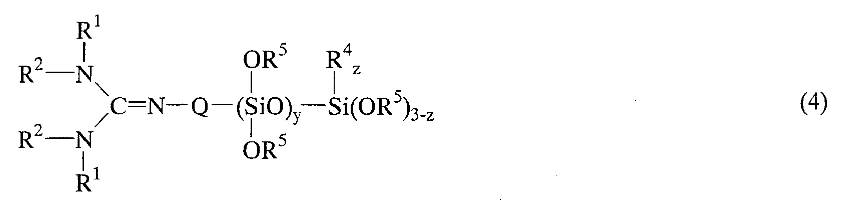 wherein R¹ and R² are as defined above, Q is an alkylene group containing 1 to 6 carbon atoms optionally having an intervening ether bond oxygen atom, R⁴ is independently hydrogen atom, a monovalent hydrocarbon group containing 1 to 10, or OSiR⁴_{b}(OR⁵)_{3-b} wherein b is 0, 1, or 2, R⁵ is hydrogen atom or a monovalent hydrocarbon group containing 1 to 10 optionally containing nitrogen atom; y is an integer of 0 or 1 to 5, and z is 0, 1, or 2.

3. A room temperature vulcanizable organopolysiloxane composition according to claim 1 or 2 wherein the component (D) is selected from among a dimethyl silicone oil wherein the methyl groups are not substituted, a dimethyl silicone oil wherein the methyl groups are partly substituted with phenyl group, an amino-modified silicone oil substituted with a monoamine, a diamine, or an amino-polyether group; an epoxy-modified silicone oil substituted with epoxy, an alicyclic epoxy, an epoxy-polyether or an epoxy-aralkyl group; a carbinol-modified silicone oil substituted with a carbinol group; a mercapto-modified silicone oil substituted with a mercapto group; a carboxyl-modified silicone oil substituted with a carboxyl group; a methacryl-modified silicone oil substituted with methacryl group; a polyether-modified silicone oil substituted with a polyether or a polyether-long chain alkyl-aralkyl group; a long chain alkyl-modified silicone oil substituted with a long chain alkyl or a long chain alkyl-aralkyl group; a higher fatty acid-modified silicone oil substituted with a higher fatty acid ester group; and a fluoroalkyl-modified silicone oil substituted with a fluoroalkyl group,
said component having a viscosity at 25°C of 20 to 30,000 mPa·s.

4. A room temperature vulcanizable organopolysiloxane composition according to any one of claims 1 to 3 further comprising
(F) a silane coupling agent containing a primary and/or secondary amino group or epoxy group.

5. A room temperature vulcanizable organopolysiloxane composition according to claim 4 wherein the component (F) is N-(2-aminoethyl)-3-aminopropyltrimethoxysilane, 3-(N-aminomethylbenzylamino)propyltrimethoxysilane, or N,N'-bis[3-(trimethoxysilyl)propyl]ethylenediamine.

6. A method for producing a room temperature vulcanizable organopolysiloxane composition of any one of claims 1 to 5 comprising the steps of mixing the components (A) and (D) with heating, and adding components (B) and (C) to the mixture.

7. An article comprising a substrate having its outermost layer covered with a cured layer of the room temperature vulcanizable organopolysiloxane composition of any one of claims 1 to 5.

8. The article according to claim 7 wherein the substrate is a substrate covered by a silicone coating or an epoxy coating.

9. The article according to claim 7 or 8 wherein the article is an underwater structure.

10. A method comprising applying a layer of a room temperature vulcanizable organopolysiloxane composition of any one of claims 1 to 5 to a substrate and curing to form a coating.

11. A method of claim 10 in which the substrate surface to which said room temperature vulcanizable organopolysiloxane composition is applied has a silicone coating or epoxy coating, and/or in which the substrate is or is part of an article which is a structure for underwater use.

## Patentansprüche

1. Bei Raumtemperatur vulkanisierbare Organopolysiloxanzusammensetzung mit Haftvermögen an Substraten, die Folgendes umfasst:
(A) 100 Gewichtsteile eines Diorganopolysiloxans mit zumindest zwei an ein Siliciumatom gebundenen Hydroxygruppen und/oder hydrolysierbaren Gruppen pro Molekül,
(B) 0,5 bis 30 Gewichtsteile eines Silans mit zumindest zwei an ein Siliciumatom gebundenen Oximgruppen pro Molekül und/oder eines partiellen hydrolytischen Kondensats eines solchen Silans,
(C) 0,01 bis 10 Gewichtsteile einer hydrolysierbaren Organosiliciumverbindung mit einer einwertigen Gruppe, die durch die folgende allgemeine Formel (1) dargestellt ist: 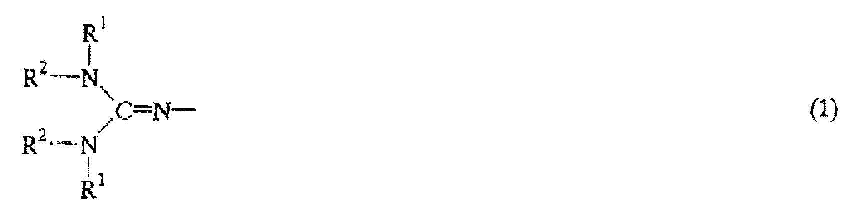 worin R¹ und R² unabhängig voneinander ein Wasserstoffatom oder eine einwertige Kohlenwasserstoffgruppe sind, oder eines partiellen Hydrolysats davon,
(D) 0,5 bis 200 Gewichtsteile eines Silica und
(E) 1 bis 300 Gewichtsteile eines Lecköls.

2. Bei Raumtemperatur vulkanisierbare Organopolysiloxanzusammensetzung nach Anspruch 1, wobei die Komponente (C) die folgende Formel (4) aufweist: 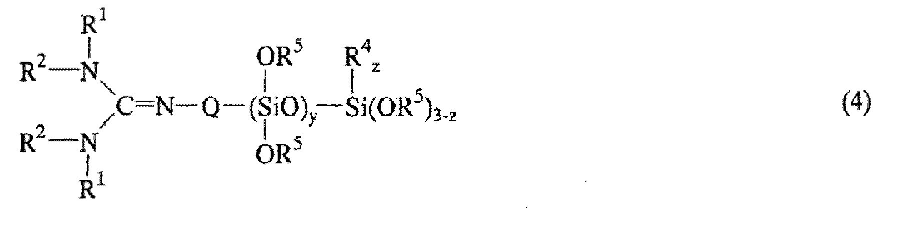 worin R¹ und R² wie oben definiert sind, Q eine Alkylengruppe mit 1 bis 6 Kohlenstoffatomen ist, die gegebenenfalls ein intervenierendes Etherbindungssauerstoffatom aufweist, R⁴ unabhängig voneinander ein Wasserstoffatom, eine einwertige Kohlenwasserstoffgruppe mit 1 bis 10 oder OSiR⁴_{b}(OR⁵)_{3-b} ist, worin b = 0, 1 oder 2 ist, R⁵ ein Wasserstoffatom oder eine einwertige Kohlenwasserstoffgruppe mit 1 bis 10 ist, gegebenenfalls mit einem Stickstoffatom; y eine ganze Zahl von 0 oder 1 bis 5 ist und z = 0, 1 oder 2 ist.

3. Bei Raumtemperatur vulkanisierbare Organopolysiloxanzusammensetzung nach Anspruch 1 oder 2, wobei die Komponente (D) aus einem Dimethylsiliconöl, worin die Methylgruppen nicht substituiert sind, einem Dimethylsiliconöl, worin die Methylgruppen teilweise mit einer Phenylgruppe substituiert sind, einem aminomodifizierten Siliconöl, das mit einem Monoamin, einem Diamin oder einer Aminopolyethergruppe substituiert ist; einem epoxymodifizierten Siliconöl, das mit Epoxy, einem alizyklischen Epoxy, einem Epoxypolyether oder einer Epoxyaralkylgruppe substituiert ist; einem carbinolmodifizierten Siliconöl, das mit einer Carbinolgruppe substituiert ist; einem mercaptomodifizierten Siliconöl, das mit einer Mercaptogruppe substituiert ist; einem carboxylmodifizierten Siliconöl, das mit einer Carboxylgruppe substituiert ist; einem methacrylmodifizierten Siliconöl, das mit einer Methacrylgruppe substituiert ist; einem polyethermodifizierten Siliconöl, das mit einem Polyether oder einer langkettigen Polyetheralkylaralkylgruppe substituiert ist; einem langkettigen alkylmodifizierten Siliconöl, das mit einem langkettigen Alkyl oder einer langkettigen Alkylaralkylgruppe substituiert ist; einem höheren fettsäuremodifizierten Siliconöl, das mit einer höheren Fettsäureestergruppe substituiert ist; und einem fluoralkylmodifizierten Siliconöl, das mit einer Fluoralkylgruppe substituiert ist, ausgewählt ist,
wobei die Komponente bei 25 °C eine Viskosität von 20 bis 30.000 mPa·s aufweist.

4. Bei Raumtemperatur vulkanisierbare Organopolysiloxanzusammensetzung nach einem der Ansprüche 1 bis 3, die weiters Folgendes umfasst:
(F) einen Silankuppler, der eine primäre und/oder sekundäre Aminogruppe oder Epoxygruppe enthält.

5. Bei Raumtemperatur vulkanisierbare Organopolysiloxanzusammensetzung nach Anspruch 4, wobei die Komponente (F) N-(2-Aminoethyl)-3-aminopropyltrimethoxysilan, 3-(N-Aminomethylbenzylamino)propyltrimethoxysilan oder N,N'-Bis[3-(trimethoxysilyl)propyl]ethylendiamin ist.

6. Verfahren zur Herstellung einer bei Raumtemperatur vulkanisierbaren Organopolysiloxanzusammensetzung nach einem der Ansprüche 1 bis 5, welches die Schritte des Vermischens der Komponenten (A) und (D) unter Erhitzen und das Zusetzen der Komponenten (B) und (C) zum Gemisch umfasst.

7. Gegenstand, der ein Substrat umfasst, dessen äußerste Schicht mit einer gehärteten Schicht aus einer bei Raumtemperatur vulkanisierbaren Organopolysiloxanzusammensetzung nach einem der Ansprüche 1 bis 5 überzogen ist.

8. Gegenstand nach Anspruch 7, wobei das Substrat ein mit einer Siliconbeschichtung oder Epoxybeschichtung überzogenes Substrat ist.

9. Gegenstand nach Anspruch 7 oder 8, wobei der Gegenstand eine Unterwasserstruktur ist.

10. Verfahren, welches das Auftragen einer Schicht aus einer bei Raumtemperatur vulkanisierbaren Organopolysiloxanzusammensetzung nach einem der Ansprüche 1 bis 5 auf ein Substrat und ihr Härten zur Ausbildung einer Beschichtung umfasst.

11. Verfahren nach Anspruch 10, wobei die Substratoberfläche, auf welche die bei Raumtemperatur vulkanisierbare Organopolysiloxanzusammensetzung aufgetragen wird, eine Siliconbeschichtung oder Epoxybeschichtung aufweist und/oder wobei das Substrat ein Gegenstand oder Teil eines Gegenstands ist, bei dem es sich um einen Gegenstand zur Verwendung unter Wasser handelt.

## Revendications

1. Composition d'organopolysiloxane vulcanisable à la température ambiante présentant une adhérence à des substrats, comprenant
(A) 100 parties en poids d'un diorganopolysiloxane ayant, par molécule, au moins deux groupes hydroxy et/ou groupes hydrolysables liés à un atome de silicium,
(B) 0,5 à 30 parties en poids d'un silane ayant, par molécule, au moins deux groupes oxime liés à un atome de silicium, et/ou un condensat hydrolytique partiel d'un tel silane,
(C) 0,01 à 10 parties en poids d'un composé organique du silicium hydrolysable ayant un groupe monovalent représenté par la formule générale (1) : 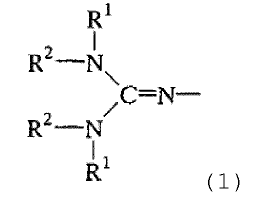 dans laquelle R¹ et R² sont indépendamment un atome d'hydrogène ou un groupe hydrocarboné monovalent,
ou un hydrolysat partiel de celui-ci,
(D) 0,5 à 200 parties en poids d'une silice, et
(E) 1 à 300 parties en poids d'une huile d'exsudation.

2. Composition d'organopolysiloxane vulcanisable à la température ambiante selon la revendication 1, dans laquelle le composant (C) répond à la formule (4) suivante : 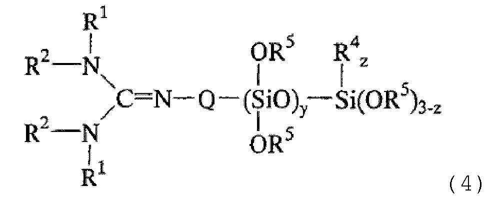 dans laquelle R¹ et R² sont tels que définis ci-dessus, Q est un groupe alkylène contenant 1 à 6 atomes de carbone et ayant éventuellement un atome d'oxygène de liaison éther intervenant, R⁴ est indépendamment un atome d'hydrogène, un groupe hydrocarboné monovalent contenant 1 à 10 atomes de carbone, ou OSiR⁴_{b}(OR⁵)_{3-b} où b vaut 0, 1 ou 2, R⁵ est un atome d'hydrogène ou groupe hydrocarboné monovalent contenant 1 à 10 atomes de carbone et contenant éventuellement un atome d'azote ; y vaut 0 ou est un entier de 1 à 5, et z vaut 0, 1 ou 2.

3. Composition d'organopolysiloxane vulcanisable à la température ambiante selon la revendication 1 ou 2, dans laquelle le composant (D) est choisi parmi une huile de diméthylsilicone dans laquelle les groupes méthyle ne sont pas substitués, une huile de diméthylsilicone dans laquelle les groupes méthyle sont partiellement substitués par un groupe phényle, une huile de silicone à modification amino substituée par une monoamine, une diamine, ou un groupe aminopolyéther ; une huile de silicone à modification époxy substituée par un groupe époxy, époxy alicyclique, époxypolyéther ou époxy-aralkyle ; une huile de silicone à modification carbinol substituée par un groupe carbinol ; une huile de silicone à modification mercapto substituée par un groupe mercapto ; une huile de silicone à modification carboxyle substituée par un groupe carboxyle ; une huile de silicone à modification méthacryle substituée par un groupe méthacryle ; une huile de silicone à modification polyéther substituée par un polyéther ou un groupe polyéther-(alkyle à longue chaîne)-aralkyle ; une huile de silicone à modification alkyle à longue chaîne substituée par un groupe alkyle à longue chaîne ou (alkyle à longue chaîne-aralkyle ; une huile de silicone à modification acide gras supérieur substituée par un groupe ester d'acide gras supérieur ; et une huile de silicone à modification fluoroalkyle substituée par un groupe fluoroalkyle,
ledit composant ayant une viscosité à 25°C de 20 à 30 000 mPa.s.

4. Composition d'organopolysiloxane vulcanisable à la température ambiante selon l'une quelconque des revendications 1 à 3, comprenant en outre
(F) un agent de couplage de type silane contenant un groupe époxy ou un groupe amino primaire et/ou secondaire.

5. Composition d'organopolysiloxane vulcanisable à la température ambiante selon la revendication 4, dans laquelle le composant (F) est le N-(2-aminoéthyl)-3-aminopropyltriméthoxysilane, le 3-(N-aminométhylbenzylamino)-propyltriméthoxysilane, ou la N,N'-bis[3-(triméthoxysilyl)propyl]éthylènediamine.

6. Procédé pour produire une composition d'organopolysiloxane vulcanisable à la température ambiante selon l'une quelconque des revendications 1 à 5, comprenant les étapes consistant à mélanger les composants (A) et (D) en les chauffant, et à ajouter au mélange les composants (B) et (C) .

7. Article comprenant un substrat dont la couche la plus extérieure est recouverte d'une couche durcie de la composition d'organopolysiloxane vulcanisable à la température ambiante selon l'une quelconque des revendications 1 à 5.

8. Article selon la revendication 7, dans lequel le substrat est un substrat recouvert d'un revêtement en silicone ou d'un revêtement en époxy.

9. Article selon la revendication 7 ou 8, dans lequel l'article est une structure sous-marine.

10. Procédé comprenant l'application d'une couche d'une composition d'organopolysiloxane vulcanisable à la température ambiante selon l'une quelconque des revendications 1 à 5 sur un substrat et le durcissement pour former un revêtement.

11. Procédé selon la revendication 10, dans lequel la surface de substrat sur laquelle est appliquée ladite composition d'organopolysiloxane vulcanisable à la température ambiante a un revêtement en silicone ou un revêtement en époxy, et/ou dans lequel le substrat est ou est une partie d'un article qui est une structure pour usage sous-marin.
